# EUROPEAN PATENT SPECIFICATION

(11) **EP 3 438 864 B1**
(45) Date of publication and mention of the grant of the patent: **10.05.2023**
(21) Application number: 16896655.4
(22) Date of filing: 01.04.2016
(51) Int. Cl.: G06F 21/54, G06F 21/60, G06F 21/62, G06F 21/64

(54) **METHOD AND SYSTEM FOR PROTECTING A COMPUTER FILE AGAINST POSSIBLE MALWARE ENCRYPTION**
VERFAHREN UND SYSTEM ZUM SCHUTZ EINER COMPUTERDATEI GEGEN MÖGLICHE MALWARE-VERSCHLÜSSELUNG
PROCÉDÉ ET SYSTÈME POUR PROTÉGER UN FICHIER NUMÉRIQUE AVANT UN ÉVENTUEL CHIFFREMENT EFFECTUÉ PAR UN LOGICIEL MALVEILLANT

(43) Date of publication of application: 06.02.2019
(73) Proprietor: Telefonica Cybersecurity & Cloud Tech S.L.U., 28050 Madrid (ES)
(72) Inventor: DE LOS SANTOS VILCHES, Sergio, 28013 Madrid (ES); GUZMÁN SACRISTÁN, Antonio, 28013 Madrid (ES); ALONSO CEBRIÁN, José, María, 28013 Madrid (ES)
(74) Representative: Herrero & Asociados, S.L.
(86) International application number: PCT/ES2016/070226
(87) International publication number: WO 2017/168016

(56) References cited:
- WO-A1-2014/062252
- CA-A1- 2 892 064
- GB-A- 2 517 483
- US-A1- 2008 256 635
- US-A1- 2008 263 363
- US-A1- 2013 067 576
- US-A1- 2014 310 800
- US-A1- 2015 058 987
- YANG TIANDA et al.: "Automated Detection and Analysis for Android Ransomware", 2015 IEEE 17th International Conference on High Performance Computing and Communications, 2015 IEEE 7th International Symposium on Cyberspace Safety and Security, and 2015 IEEE 12th International Conference on Embedded Software and Systems, 24 August 2015 (2015-08-24), pages 1338-1343, XP032819393,

## Description

### TECHNICAL FIELD OF THE INVENTION

The present invention is applicable in the field of security and information processing, and more specifically in the monitoring and detection of malicious code in electronic devices, such as for example malicious encryption programs.

### BACKGROUND OF THE INVENTION

Currently, the proliferation of spyware and malicious code (known as "malware") provide new forms of cybercrime, such as taking files hostage by using encryption programs that are able to lock the information and data stored on a computer in a remote manner. These types of programs are known as Crypto-Ransomware. It is worth mentioning that starting from this generic concept multiple popular families have appeared (cryptolocker, cryptowall, ctb-lockers, torrentlocker, ZeroLockers, CoinVault, TeslaCrypt, Chimera, AlphaCrypt...). This type of malware, once it infects the device of the victim, which could be for example a computer, a phone, a virtualisation on a network or in the cloud, encrypts a good portion of the contents of the system or files thereof and establishes a system to extort the victim in exchange for obtaining the encryption key.

The computer code necessary to perform this locking of information needs to be introduced into the target equipment. Usually, to do so it is camouflaged inside another file that is apparently inoffensive to the user, who unconsciously executes said code mistaking it for a file coming from a reliable source.

Once the code is executed in the system, it is activated and causes the locking of the entire operating system or a portion of it and it launches the ransom note in order to recover control of the equipment. The basic operation consists, first, of performing a file search, in the system of the victim with certain extensions, and encrypting them after communicating with a command and control server, meaning, centralised machines that are able to send and receive orders from networks of compromised equipment (zombie networks) installed in other machines. The search is performed in different locations of the hard drive. The sensitive points fundamentally tend to be the points in which the user can write under which the malicious code is executed. Normally, the %USERPROFILE% directory, or user space, inside the system partition, other partitions of the hard drive, possible external mount points (hard drives) and shared units, both remote and local. Second, the guidelines to be followed are shown so that the victim delivers the ransom in order to regain control of their encrypted information.

The infection mechanisms are common to the rest of existing malware, in general it can come from spam/phishing, vulnerabilities in the network, vulnerabilities in RDP services, other malware, etc...

The practices for preventing infection with this malware are the same as those for preventing any virus, in other words, keeping the operating system updated in order to prevent security errors, installing antivirus programs that facilitate the monitoring of the file system in search of anomalies, adequately configuring a firewall, not opening or executing files from unknown senders, avoiding navigating on pages that are not secure, maintaining an effective policy for backup files or enabling measures to mitigate the effect of the vulnerabilities.

Additionally, in the state of the art there are other solutions focused more specifically on the behaviour and effects of this type of malware. For example, defining white lists of applications; applying reactionary solutions focused on monitoring processes which take up a great number of files; or monitoring false "bait" files that, when they are touched by a process, indicate some sort of malicious activity.

Some of these solutions, separately or combined, manage to reduce the risks of being infected by ransomware-type malicious code, but unfortunately, all of these leave open a window of opportunity for some of the files of the victim to be compromised. For example, although it is limited to the execution of certain processes, current Crypto-Ransomware is injected into legitimate processes, such that the process that finally encrypts the files is, for all purposes, a legitimate one from the system. Thus, it is impossible to block them as unitary and "controllable" binaries.

Therefore, in light of the aforementioned, it is necessary to create solutions that eradicate the possibility of this type of malware affecting the users of the systems.

US 2015/058987 A1, US 2013/067576 A1, and WO 2014/062252 A1 are prior art.

### DESCRIPTION OF THE INVENTION

The present invention solves the aforementioned problems of external encryption of documents, computer insecurity and risk of losing sensitive information by proposing a solution to protect computer files which removes any window of opportunity wherein a third party can compromise the critical files of a victim. To do so, specifically in a first aspect of the invention, a method for protecting a computer file, stored in an electronic device managed by an operating system, from a possible encryption performed by malicious code is presented. The method comprises the following steps performed by the electronic device:
a) detecting a request to access the file made by a user or a computer process of the operating system;
b) copying the file in a temporary folder of a memory unit of the electronic device;
c) performing modifications made by the user or the process on the copy of the file;
d) checking, in a verification module, if the modifications entail an encryption of the file;
e) if after checking in step d) it is determined that the modifications do not entail the encryption of the file, performing the same modifications in the original file;
f) if after checking in step d) it is determined that the modifications do entail the encryption of the file, creating a warning for the user, through an interface of the electronic device.

Additionally, the prior storage of the file in a secure partition of a storage unit of the electronic device is envisaged.

One of the embodiments of the invention comprises assigning a level of maximum security direct access to the file, according to the operating system. Thus, by default, direct access to the file is denied for all the users and processes, except those with maximum privileges, with which the security of the system is advantageously increased.

It is envisaged, in one of the embodiments of the invention, that copying the file in a temporary folder further comprises assigning original metadata to said copy with information about the file itself and the user or process that performed the access request. Thus, advantageously, it is guaranteed that it is possible, later on, to restore a coherent version with the activity performed on the file. Additionally, according to one of the embodiments of the invention, linking synthetic metadata with the original metadata assigned to the copy of the file is envisaged, wherein said synthetic metadata registers any activity performed on the file. Thus, advantageously, the traceability in the accesses to the file is guaranteed.

The present invention envisages that copying the file in a temporary folder further comprises creating a handler for the copy and sending said handler to the user or process that performed the access request. In one of the embodiments, the handler points to the original file and locks it for writing for any user or process that is not the owner of said handler. Additionally, an additional step of verifying, in a guard module, the identity of the user or process that made the access request is envisaged.

Optionally, it is envisaged that, after the creation of a warning, the present invention comprises, in one of the embodiments thereof, an interaction of the user with the interface of the electronic device to confirm that the modifications made in the copy of the file need to be made in the original file. Thus, a suspicious process requires explicit supervision from a user, meaning that the malicious processes that may have been camouflaged at some point would need to overcome a barrier that is practically insurmountable.

Optionally, it is envisaged that once the modifications on the copy of the file have been finalised, one of the embodiments of the invention deletes the temporary file and re-establishes the original file.

Additionally, the present invention envisages in one of the embodiments thereof registering any action that affects the file in a registry of the operating system.

A second aspect of the invention relates to a system for protecting a computer file from a possible encryption performed by malicious code. The system comprises:
- an electronic device managed by an operating system that stores the file;
- a verification module configured to check if modifications made on the copy of the file, by the user or the process, entail an encryption of the file;
- a processor configured to perform the following steps: detecting a request to access the file by a user or a computer process of the operating system; copying the file in a temporary folder of a memory unit of the electronic device; and depending on the checking of the verification module: if it is determined that the modifications do not entail the encryption of the file, performing the same modifications in the original file; if it is determined that the modifications do entail the encryption of the file, creating a warning for the user, through an interface of the electronic device.

According to one of the embodiments of the invention, the verification module is configured to evaluate the entropy of the file.

Additionally, the present invention envisages a guard module configured to verify the identity of the user or process that made the access request.

A last aspect of the invention relates to a computer program characterised in that it comprises program code means adapted to perform the steps of the method, when said program is executed in a general purpose processor, a digital signal processor, an FPGA, an ASIC, a microprocessor, a microcontroller, or any other form of programmable hardware.

Thus, according to all the foregoing, the present invention is a valuable alternative for the defence of computer files, mainly against a type of malware called Ransomware. There are multiple advantages and the technical characteristics entail advantageous and beneficial effects for the state of the art. For example, it anticipates the problems proactively, apart from reactively, meaning, unlike conventional solutions, wherein the detection is performed when the affected resource has already been accessed, the present invention can anticipate the threat and prevent the damage that it causes before it affects the resource itself.

Furthermore, the proposed protection of files is transparent to the user, meaning that the user is barely aware of said protection (it may only require their interaction when an encryption threat of a file is detected), since it is completely compatible with any operating system with almost no interference. This makes it a solution that is simple and complements existing ones as far as detecting ransomware which can even receive, without substantial modifications, any improvement that those other solutions experience.

The present invention is defined by the appended independent claims 1, 8, and 11. Preferred embodiments are set forth in the dependent claims.

### DESCRIPTION OF THE DRAWINGS

As a complement to the description provided herein, and for the purpose of helping to make the characteristics of the invention more readily understandable, a figure is attached as an integral part of said description, which, by way of illustration and not limitation represent the following:

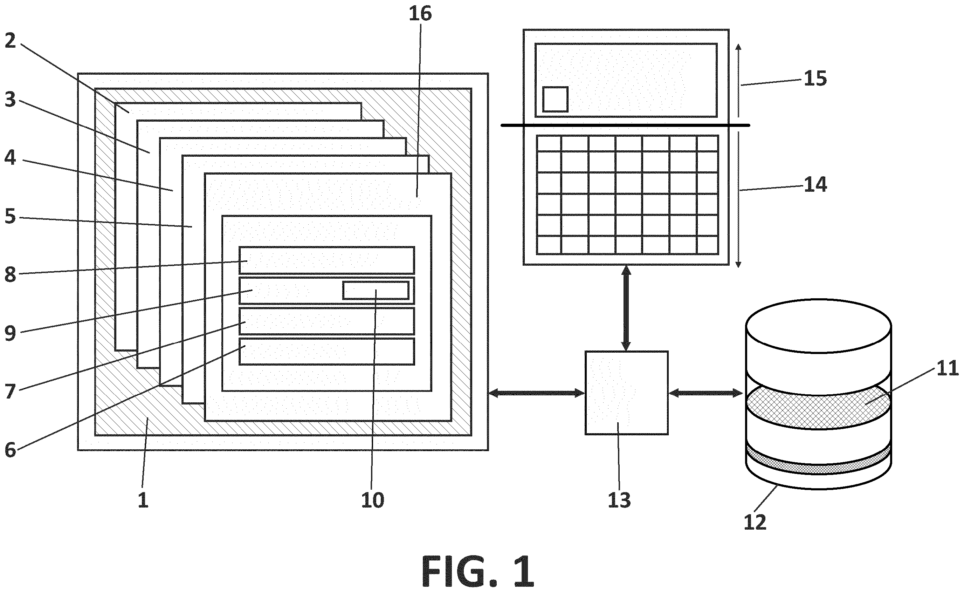

**Figure 1****.-** shows a general diagram of the present invention, according to one of the embodiments.

### DETAILED DESCRIPTION OF THE INVENTION

That which is defined in this detailed description is provided to help achieve a thorough understanding of the invention. Consequently, a person having ordinary skill in the art will recognise that variations, changes and modifications of the embodiments described in the present specification are possible without detracting from the scope of the invention. Furthermore, the description of functions and elements that are well known in the state of the art is omitted for clarity and conciseness.

Of course, the embodiments of the invention can be implemented in a wide variety of architectonic platforms, protocols, devices and systems, for which reason the specific designs and implementations presented in this document are provided only with the purpose of illustration and understanding, and never to limit aspects of the invention.

The present invention discloses a security method for preventing the encryption by third parties of the information of a user, such as for example personal files or sensitive work documents. Said information is stored in electronic equipment of the user, such as a personal computer, a phone, a virtualisation on a network or in the cloud. The encryption from which the present invention protects the user is a consequence of unconsciously executing a malicious agent, or program with malicious code, planted by a third party in the equipment of the user, called Crypto-Ransomware; however, they do not usually damage the operating system, or elevate privileges, or exploit vulnerabilities. The operation thereof does not need to elevate privileges (for example by establishing superuser or administrator permissions) but rather it is enough for them to access at the same user level as the victim. Thus, the method of the present invention takes advantage of the architecture of the permissions and privileges of the operating system itself in order to prevent the writing of the malicious agent in the files sensitive to being held hostage or encrypted, since these permissions are not escapable unless there is a security problem in the operating system itself. Furthermore, if these permissions are established by an entity with greater privileges in the system, they cannot be removed by the malware itself unless it moves on the same user plane with the same permissions as the user of the equipment of the victim.

The method of the present invention offers protection against the possible aforementioned attacks, allowing the user to interact with the files they want to protect in a comfortable manner, preventing any process attempting to modify them and this from being performed at a higher privilege level.

One of the embodiments of the invention comprises a structure of layers in order to implement a solution based on permissions, locking and privileges. Thus, in a first layer, the permissions necessary to prevent a process from modifying a file are established, by means of the intelligent use of the permissions of the file system of the operating system; in a second layer, a strategy for locking the file during the editing thereof is established, but that does not prevent the writing and modification of the file when the user needs to edit them comfortably; and in a third layer, preventing a process or malware, aware that the permissions can be modified by the user, from trying to modify a file from the same privilege level before encrypting it, and thus, cancelling the protection, a process is established that, being executed with a privilege level higher than that of the user (i.e. privileges of an administrator of the system), it is responsible for establishing the necessary permissions and preventing the user level (and that of the malware, the majority of the time) from modifying them without the authorisation thereof.

Below, according to one of the embodiments of the invention, the operation of each of the layers is described in detail.

The first layer, that which is related to the permissions, according to one of the embodiments of the invention comprises assigning a maximum security level to the files to be protected in order to directly access the same. Thus it guarantees that any direct access to said files is limited to users or processes with a very high privilege level, preferably the maximum level that the operating system allows (system administrator level). Thus, the documents remain protected (both for the malware and for the user) by choosing the suitable permissions that prevent both the writing and modification as well as the deletion of files or the modification of permissions. Thus, all the permissions are by default explicitly denied to all users (usual generic group in an operating system) and no process, legitimate or not, can encrypt them, unless it avoids the security of the operating system itself or modifies the permissions before performing the encryption operation. Evidently, a vulnerability of the operating system depends only on the operating system itself and does not concern the solution presented herein, but the modification of permissions forces, on one hand, the file to change owners to one with greater privileges (i.e. SYSTEM in the case of Microsoft operating systems) and on the other hand, the new owner will prevent any other user from modifying the permissions, with which, as of this moment, if a malicious process were to modify the permissions before encrypting the file, it would need to further modify the owner (SYSTEM user in the case of Microsoft operating systems), and to do so, again, it is necessary to have the suitable privileges. In summary, it cannot modify permissions without elevating privileges.

The second layer is that which is related to the locking. Although the first layer enables any unwanted access to be prevented, when a user wants to modify one of the protected files, a mechanism is necessary that facilitates this modification transparently and without taking any risks. The present invention, according to one of the embodiments thereof, envisages the creation of an editable copy of the original file, monitoring the activity performed on the file in order to determine if it is causing the encryption of the contents and, if no problem is detected, propagating the changes to the original file in a secure manner, which will continue to have the elevated privileges. Thus, once a user has opened the file through the mechanism that this second layer implements, with the aim of editing it temporarily, the solution proposed by the present invention re-establishes the permissions thereof over the secure copy so that the operation can be performed. During all of this editing, according to one of the embodiments of the invention, both the original file and the editable file remain locked for exclusive use of the user that establishes the protection. By way of example, the following particular implementation is added, wherein the basic operation of this layer is described in the following points:
1.- The original contents of the file are copied to a temporary folder, which will be called hereinafter *file'.*
2.- An instance of this *file'* loaded in the memory of the system is opened and a handler (or file handler) is created pointing to the original file, which locks it for writing for any process that is not the owner of that handler.
3.- The user will work on *file',* copied in the temporary folder. The method of the present invention is responsible for, against any modification, redirecting the information to the original file, such that it is modified only when necessary. This is possible because the present invention maintains the file handler. The flow of information is made to pass through a module that verifies if the encryption of the contents is being carried out, thus it is protected against attacks from a crypto-locker that knows specifically how the solution proposed herein operates. If the module determines that the modification of the file involves the encryption of the contents thereof, it sends out a warning that must be specifically attended to by the user, suspending the modification of the file.
4.- Finally, when the program that edits the file is closed, the temporary files are deleted, the original file is re-established, the instances in the memory are removed and the locking permissions are re-established.

The third layer is responsible for managing the privileges. As mentioned previously, the present invention resorts to elevating privileges in order to change permissions and establish owners of files. According to one of the embodiments, the figure of a service, or watcher, is established in the equipment to be protected which acts as a guard module with maximum privileges (SYSTEM in Windows systems, for example) and which is responsible for, in order to protect the files, receiving suitable commands (which it only accepts from a legitimate process) to modify permissions and owners; and moreover, in order to unprotect the files, receiving the suitable commands (which it only accepts from a legitimate process) to modify permissions and owners.

The basic operation of this layer, according to one of the embodiments of the invention, therefore consist of, once a route requested by the legitimate and authorised process has been received, locking or unlocking the file according to the suitable permissions.

The service or watcher is responsible for verifying the identity of the process that requests the modification from it, through (although not only limited to) the checking of the digital signature of the binary from which the process was launched. Furthermore, it checks to see if a library or malicious code has not been injected in the memory that may have altered the behaviour thereof in the memory. This checking can be performed in multiple different forms. For example, according to one of the embodiments of the invention, it envisages listing the most common dynamic link libraries, DLL, of a process, making a white list and checking it before attending to an executable file. Alternatively, for example, the memory space can be explored before attending to said files.

The locking and unlocking process is performed when it is detected that the file is being used by a program. At that time the process starts to be monitored. When the process ends, another signal is sent to the guard module in order for the locking permissions to be established again, given that the method determines that the user has stopped editing the file.

**Figure 1** is provided in order to facilitate the understanding of how the incorporation of the present invention affects the standard behaviour. To do so, it is also necessary to briefly note the operation of the routines of a modern operating system (1), which are responsible for the management of the files by orchestrating the execution of multiple subsystems, such as for example AC, VMS, MMS or syslog (2, 3, 4, 5). Once a user or a process requests access to a file from the user space (14) thereof, the operating system checks if this user has permission to access the file system and, if they do, recovers the information from said file system it associates with the file in question and with the structure of directories that can contain it, acts as meta-information to facilitate the interaction with the modules of the operating system. Through this information it is possible to determine if the user or the process that requests the file has some sort of permission (Reading, writing, etc.) for the file in question. If the user that requests the file is a user that has permissions to perform the access, the corresponding routine of the operating system is executed in the processor and it provides the starting address of the file and the size thereof, as well as determining a RAM memory address wherein the file may be copied. The controller of the system (13) receives the signalling to translate these addresses that, until now, have been handled logically, to physical addresses on the devices. Thus, the controller takes care of recovering the information from the permanent storage unit (12), normally a hard drive, reserving a space in the main memory of the system, locating the recovered information (or a portion of it) in said space and returning the memory address where this space starts to the user. Typically, this address is encapsulated in a software structure upon which the basic routines for interacting with the file in the memory are defined. This structure can be called a file handler. By using this handler, the user can read, add, remove or modify the contents of the file. They can also close the file, forcing the writing of the modifications in the hard drive. Updating the physical file, as well as the form in which the file is located in the memory depends on the implementation of each operating system. All modern operating systems incorporate a registry of the system ("syslog") in the design thereof wherein all the accesses to these and other resources of the system are registered.

On this basis, the present invention proposes the substitution of the routines with which the operating systems (1) interact with the file system and widen the set of these routines with those that facilitate the operation of other subsystems (for example the access control unit "AC" (2), the virtual memory of routines of the system "VMS" (3), the system routine management memory "MMS" (4), or the system registry "syslog" (5)), without requiring a deterioration in the manner in which the user interacts with the system.

The present invention envisages, in one of the embodiments thereof, a partition (11) in the storage unit (12) of the equipment, which can be logical or physical, which houses those files that require exceptional protective measures. This creation can be performed during the installation of the present invention, but the framework can be extended to other partitions or directories of the file system. The files that are included in this protective partition are those with contents that are critical for the user, for which reason the selection of files that should be included in this partition is made at their discretion, although according to an alternative embodiment, the type of files that should be automatically stored in the partition can be configured beforehand.

The partition can incorporate additional protective measures, but given that the main interest of the present invention is ransomware, according to one of the embodiments, any file that is located in this partition will deny the access permissions for any user, except for a privileged account of the system (for example in Microsoft operating systems it could be the SYSTEM user), with which it will only be accessible from a system space (15) and the privileged routines of the operating system.

The present invention, according to the operation proposed previously, defines four basic processes that are added to the routines (16) defined for the operating system (apart from the creation of the partition) which depends on the file system chosen. These processes concern the protection of a file (6), the removal of the protection of a file (7), the opening of a file (8) and the closing of a file (9).

### Protection of a file (6)

It is necessary to enable the routines that facilitate, once the file to be protected has been selected, the inclusion thereof in the protected partition. This incorporation entails the registry of all the data relating to files and to the user that the file system could store, as meta-information. Said meta-information, which on occasion contains information about the users and about the execution environment, is that which is created by default by the operating system and the applications in order to streamline or personalise the use of these files. It is stored to guarantee that, once it has been decided to unprotect the resource, it is possible to restore a version that is coherent with the activity performed on the resource.

Then, new metadata (synthetic metadata) is created and a protected version of the file, already located in the partition, will be created. This synthetic metadata is defined to guarantee the traceability in the accesses to the file and is linked to the information recovered from the original file (original metadata) that is stored in order to be able to fully develop the functionality of the present invention. A portion of this synthetic metadata contains information similar to that of the original meta-information, but not with regards to the user. Furthermore, it can contain another type of data that facilitates the identification of the file and the traceability of the activity developed on it.

The original metadata receives updates, based on the use that is made of the corresponding file, each time a change is made in the policies defined for said file, but this does not affect the synthetic metadata created for the storage of the copy, for example in the protected partition. As such, this level of protection remains transparent to the user who is the owner of the information.

Finally, once the file is protected, the process is noted in the registry of the system.

### Removal of the protection of a file (7).

Once a user decides to remove the protection on a file, according to one of the embodiments of the present invention, the following steps take place:
1. It is verified that the user is the owner of the resource or that the administrator of the system gave them sufficient permissions to modify the permission scheme that was defined for the same (e.g. in Microsoft operating systems this means having complete control over the file).
2. This action is registered in the system registry, for example "syslog".
3. The contents of the file to be released are recovered and with them a new version of the file is created, wherein the metadata associated with the file system is coherent with the permission scheme to which the file is now moved and that were collected in the original metadata.
4. The permission level that the file had initially is restored in the access control system of the operating system. If the file has been created directly in the protected partition, it is assigned a permission scheme by default based on the user that created it.

### Opening a file (8).

Each time a request to access a file is carried out from a process or from a module of the operating system, said request is intercepted and analysed in order to determine if it is related to a protected file. According to one of the embodiments of the invention, as commented previously, the files can be stored in a secure partition of a storage unit of the electronic device, which facilitates the implementation of the solution for identifying the requests to access any file stored in said protected partition thanks to the access route thereof. In any case, according to different embodiments of the invention, the interception of the request can be implemented under different approaches, such as for example, according to one of said embodiments, establishing a specific program for opening the protected files, which solves the different layers comprising the present invention. This solution is less invasive with respect to the implementation over the operating system but it suffers from low usability. In contrast, another alternative envisaged in a different embodiment of the present invention comprises overloading the routines of the operating system in order to guarantee that the system calls are intercepted. This solution depends on the operating system used, but it offers a greater level of transparency for the user and therefore improves the usability of the solution. In both cases, the interception and analysis are possible once the solution has been installed in the system.

The analysis process depends on the implementation of each operating system and on the file systems that are being used in each case. However, the objective in all the cases is that of verifying if a file is accessible for a certain level of protection, if the user, or the process with which they interact with the system, has permissions to access the file in the way they are requesting (reading, writing, etc.). In the case of it being determined that the user or process can access the file and the file is in the protected partition, according to an embodiment of the invention, the following steps happen:
1. Creating an event in the syslog to register the access by the user. To do so, the information stored in the form of original metadata is used.
2. Locking the file in the protected partition. This is done by using the mechanisms provided by the operating system, such as for example defining a file handler in mutual exclusion.
3. Creating a copy of the file in a temporary location of the drive and creating a handler for it. This location can be any logical partition which enables the system of files tolerated by the operating system, from a folder to a logical partition created on the drive.
4. Assigning the permissions that may have been defined for the protected file to the temporary file.
5. Returning the handler defined on the temporary file to the user or process that made the access request.

### Closing a file (9).

This process encompasses all the routines of the operating system which enable the modifications on the files made in the system memory to be transferred to the file system. The invention defined herein envisages the interception of all these routines. Again, the interception mechanism depends on each operating system and file systems. However, independently of this mechanism, once the modification or file-closing request is intercepted, for example by checking that the file is located in a protected partition, the present invention, according to one of the embodiments, envisages verifying if the user/process has privileges to be able to modify the contents of this resource. If the user has sufficient privileges, it is analysed (10) if the changes made to the file, in comparison with the original that is still stored and locked in the protected partition, could entail the unwanted encryption of the contents. There are multiple strategies for performing this analysis, such as for example, according to one of the embodiments of the invention, being based on the evaluation of the entropy. Nevertheless, any other analysis technique can be equally valid, as long as it complements the results that are obtained with that which is mentioned.

If the result of this analysis is negative and the changes that were made in the file cannot correspond to an encryption system, the file in the partition is then overwritten with the modifications registered in the temporary file. Once the modification is completed:
1. A corresponding event is created in the syslog in order to reflect that the user in question, using a certain process, has overwritten the file.
2. The handler of the temporary file is released
3. The temporary file is removed.
4. The file of the protected partition is released.
5. If the result of this analysis concludes that it is probable that the contents of the file are encrypted, the modification/writing process, which until now is transparent to the user, is interrupted and an explicit confirmation is requested in order to continue with the writing in the drive. If said confirmation is obtained it continues according to the steps described in point 3. If a confirmation is not obtained, the suspicious user/process is tagged and a warning is sent to call for the intervention of the legitimate user.

## Claims

1. A method for protecting a computer file, stored in an electronic device managed by an operating system, from a possible encryption performed by malicious code, wherein the method comprises the following steps performed by the electronic device:
a) detecting a request to access the computer file made by a user or a computer process of the operating system;
b) copying the computer file in a temporary folder of a memory unit of the electronic device, wherein copying the computer file in a temporary folder comprises creating a handler for the copy of the computer file and sending said handler to the user or the computer process that performed the access request;
c) assigning a level of maximum security direct access to the computer file, according to the operating system, thereby denying direct access to the computer file for all users and processes, except those with maximum privileges;
d) performing modifications made by the user or the computer process on the copy of the computer file;
e) in case of file modification, checking, in a verification module, if the modifications entail an encryption of the copy of the computer file;
f) if after checking in step e) it is determined that the modifications do not entail the encryption of the copy of the computer file, performing the same modifications in the computer file;
g) if after checking in step e) it is determined that the modifications do entail the encryption of the copy of the computer file, creating a warning for the user, through an interface of the electronic device;
wherein the method further comprises registering any action that affects the computer file in a registry of the operating system.

2. The method according to claim 1 which further comprises storing the computer file in a secure partition of a storage unit of the electronic device.

3. The method according to any of the preceding claims, wherein copying the computer file in a temporary folder further comprises assigning original metadata to said copy with information about the computer file itself and the user or process that performed the access request.

4. The method according to claim 3 which further comprises linking synthetic metadata with the original metadata assigned to the copy of the computer file, wherein said synthetic metadata registers any activity performed on the computer file.

5. The method according to any of the preceding claims which further comprises verifying, in a guard module, the identity of the user or the computer process that performed the access request.

6. The method according to any of the preceding claims which, after the creation of a warning, further comprises an interaction of the user with the interface of the electronic device to confirm that the modifications made in the copy of the computer file need to be made in the original computer file.

7. The method according to any of the preceding claims which further comprises, once the modifications on the copy of the computer file have been finalised, deleting the temporary file and re-establishing the original computer file.

8. A system for protecting a computer file from a possible encryption performed by malicious code comprising:
- an electronic device managed by an operating system that is configured to store the computer file;
- a verification module configured to, in case of file modification, check if modifications made on the copy of the computer file, by a user or a computer process, entail an encryption of the copy of the computer file;
- a processor configured to perform the following steps: detecting a request to access the computer file by the user or the computer process of the operating system; copying the computer file in a temporary folder of a memory unit of the electronic device, wherein copying the computer file in a temporary folder comprises creating a handler for the copy of the computer file and sending said handler to the user or process that performed the access request; assigning a level of maximum security direct access to the computer file, according to the operating system, thereby denying direct access to the computer file for all users and processes, except those with maximum privileges; registering any action that affects the computer file in a registry of the operating system; and depending on the checking of the verification module: if it is determined that the modifications do not entail the encryption of the copy of the computer file, performing the same modifications in the computer file; if it is determined that the modifications do entail the encryption of the copy of the computer file, creating a warning for the user, through an interface of the electronic device.

9. The system according to claim 8 wherein the verification module is configured to evaluate the entropy of the computer file.

10. The system according to any of claims 8-9 which further comprises a guard module configured to verify the identity of the user or the computer process that performed the access request.

11. A computer program **characterised in that** it comprises program code means adapted to perform the steps of the method according to any of claims 1 to 7, when said program is executed in a general purpose processor, a digital signal processor, an FPGA, an ASIC, a microprocessor, a microcontroller, or any other form of programmable hardware.

## Patentansprüche

1. Ein Verfahren zum Schützen einer Computerdatei, die in einem durch ein Betriebssystem verwaltetes Elektronikgerät gespeichert ist, vor einer möglichen Verschlüsselung, die durch einen böswilligen Code durchgeführt wird, wobei das Verfahren die folgenden Schritte aufweist, die durch das Elektronikgerät durchgeführt werden:
a) Erfassen einer Anforderung, auf die Computerdatei zuzugreifen, die durch einen Nutzer oder einen Computerprozess des Betriebssystems gestellt wurde;
b) Kopieren der Computerdatei in einen temporären Ordner einer Speichereinheit des Elektronikgeräts, wobei das Kopieren der Computerdatei in einen temporären Ordner ein Erzeugen einer Handhabungseinrichtung für die Kopie der Computerdatei und ein Senden der Handhabungseinrichtung an den Nutzer oder den Computerprozess aufweist, der die Zugriffsanforderung gestellt hat;
c) Zuweisen eines maximalen Sicherheitspegels zu einem direkten Zugriff auf die Computerdatei gemäß dem Betriebssystem, wodurch ein direkter Zugriff auf die Computerdatei für alle Nutzer und Prozesse verweigert wird, abgesehen von denjenigen mit maximalen Privilegien;
d) Durchführen von Modifikationen, die durch den Nutzer oder den Computerprozess an der Kopie der Computerdatei vorgenommen wurden;
e) im Falle einer Dateimodifikation, Prüfen, in einem Verifizierungsmodul, ob die Modifikationen eine Verschlüsselung der Kopie der Computerdatei nach sich ziehen;
f) falls nach dem Prüfen in Schritt e) bestimmt wird, dass die Modifikationen keine Verschlüsselung der Kopie der Computerdatei nach sich ziehen, Durchführen der gleichen Modifikationen in der Computerdatei;
g) falls nach dem Prüfen in Schritt e) bestimmt wird, dass die Modifikationen die Verschlüsselung der Kopie der Computerdatei nach sich ziehen, Erzeugen einer Warnung für den Nutzer über eine Schnittstelle des Elektronikgeräts;
wobei das Verfahren ferner ein Registrieren jedes Schritts, der die Computerdatei betrifft, in einer Registrierungsdatenbank des Betriebssystems aufweist.

2. Das Verfahren gemäß Anspruch 1, das ferner ein Speichern der Computerdatei in einer sicheren Partition einer Speichereinheit des Elektronikgeräts aufweist.

3. Das Verfahren gemäß einem der vorhergehenden Ansprüche, bei dem das Kopieren der Computerdatei in einen temporären Ordner ferner ein Zuweisen von Original-Metadaten zu der Kopie mit Informationen über die Computerdatei selbst und den Nutzer oder den Prozess, der die Zugriffsanforderung ausgeführt hat, aufweist.

4. Das Verfahren gemäß Anspruch 3, das ferner ein Verknüpfen synthetischer Metadaten mit den Original-Metadaten aufweist, die der Kopie der Computerdatei zugewiesen sind, wobei die synthetischen Metadaten jede Aktivität registrieren, die an der Computerdatei durchgeführt wird.

5. Das Verfahren gemäß einem der vorhergehenden Ansprüche, das ferner ein Verifizieren der Identität des Nutzers oder des Computerprozesses, der die Zugriffsanforderung durchgeführt hat, in einem Schutzmodul aufweist.

6. Das Verfahren gemäß einem der vorhergehenden Ansprüche, das nach der Erzeugung einer Warnung ferner eine Interaktion des Nutzers mit der Schnittstelle des Elektronikgeräts aufweist, um zu bestätigen, dass die Modifikationen, die an der Kopie der Computerdatei durchgeführt wurden, in der Original-Computerdatei durchgeführt werden müssen.

7. Das Verfahren gemäß einem der vorhergehenden Ansprüche, das ferner, sobald die Modifikationen an der Kopie der Computerdatei fertiggestellt wurden, ein Löschen der temporären Datei und ein Wiederherstellen der Original-Computerdatei aufweist.

8. Ein System zum Schützen einer Computerdatei vor einer möglichen Verschlüsselung, die durch einen böswilligen Code durchgeführt wird, das folgende Merkmale aufweist:
ein Elektronikgerät, das durch ein Betriebssystem verwaltet wird, das konfiguriert ist, die Computerdatei zu speichern;
ein Verifikationsmodul, das konfiguriert ist, im Fall einer Dateimodifikation zu prüfen, ob Modifikationen, die an der Kopie der Computerdatei durch einen Nutzer oder einen Computerprozess durchgeführt werden, eine Verschlüsselung der Kopie der Computerdatei nach sich ziehen;
einen Prozessor, der konfiguriert ist, die folgenden Schritte durchzuführen: Erfassen einer Anforderung, auf die Computerdatei zuzugreifen, die durch einen Nutzer oder einen Computerprozess des Betriebssystems gestellt wurde; Kopieren der Computerdatei in einen temporären Ordner einer Speichereinheit des Elektronikgeräts, wobei das Kopieren der Computerdatei in einen temporären Ordner das Erzeugen einer Handhabungseinrichtung für die Kopie der Computerdatei und das Senden der Handhabungseinrichtung an den Nutzer oder den Computerprozess aufweist, der die Zugriffsanforderung gestellt hat; Zuweisen eines maximalen Sicherheitspegels zu einem direkten Zugriff auf die Computerdatei gemäß dem Betriebssystem, wodurch ein direkter Zugriff auf die Computerdatei für alle Nutzer und Prozesse verweigert wird, abgesehen von denjenigen mit maximalen Privilegien; Registrieren jedes Schritts, der die Computerdatei betrifft, in einer Registrierungsdatenbank des Betriebssystems; und abhängig von dem Prüfen des Verifikationsmoduls: falls bestimmt wird, dass die Modifikationen keine Verschlüsselung der Kopie der Computerdatei nach sich ziehen, Durchführen der gleichen Modifikationen in der Computerdatei; falls bestimmt wird, dass die Modifikationen die Verschlüsselung der Kopie der Computerdatei nach sich ziehen, Erzeugen einer Warnung für den Nutzer durch eine Schnittstelle des Elektronikgeräts.

9. Das System gemäß Anspruch 8, bei dem das Verifikationsmodul konfiguriert ist, die Entropie der Computerdatei zu bewerten.

10. Das System gemäß einem der Ansprüche 8 bis 9, das ferner ein Schutzmodul aufweist, das konfiguriert ist, die Identität des Nutzers oder des Computerprozesses, der die Zugriffsanforderung durchgeführt hat, zu verifizieren.

11. Ein Computerprogramm, das **dadurch gekennzeichnet ist, dass** dasselbe eine Programmcodeeinrichtung aufweist, die angepasst ist, die Schritte des Verfahrens gemäß einem der Ansprüche bis 7 durchzuführen, wenn das Programm in einem Universalprozessor, einem Digitalsignalprozessor, einem FPGA, einem ASIC, einem Mikroprozessor, einem Mikrocontroller oder jeder anderen Form von programmierbarer Hardware ausgeführt wird.

## Revendications

1. Procédé pour protéger un fichier informatique, stocké dans un dispositif électronique géré par un système d'exploitation, d'un chiffrement éventuel réalisé par un code malveillant, dans lequel le procédé comprend les étapes suivantes réalisées par le dispositif électronique :
a) la détection d'une requête d'accès au fichier informatique formulée par un utilisateur ou un processus informatique du système d'exploitation ;
b) la copie du fichier informatique dans un dossier temporaire d'une unité de mémoire du dispositif électronique, dans lequel la copie du fichier informatique dans un dossier temporaire comprend la création d'un gestionnaire pour la copie du fichier informatique et l'envoi dudit gestionnaire à l'utilisateur ou au processus informatique qui a diligenté la requête d'accès ;
c) l'attribution d'un niveau d'accès direct en sécurité maximum au fichier informatique, en fonction du système d'exploitation, d'où ainsi le refus d'un accès direct au fichier informatique pour tous les utilisateurs et processus, à l'exception de ceux qui disposent de privilèges maximum ;
d) la réalisation de modifications effectuées par l'utilisateur ou le processus informatique sur la copie du fichier informatique ;
e) dans le cas d'une modification de fichier, la vérification, dans un module de vérification, de si les modifications impliquent un chiffrage de la copie du fichier informatique ;
f) si, après la vérification de l'étape e), il est déterminé que les modifications n'impliquent pas le chiffrage de la copie du fichier informatique, la réalisation des mêmes modifications dans le fichier informatique ;
g) si, après la vérification de l'étape e), il est déterminé que les modifications impliquent le chiffrage de la copie du fichier informatique, la création d'un avertissement à destination de l'utilisateur, par l'intermédiaire d'une interface du dispositif électronique ;
dans lequel le procédé comprend en outre l'enregistrement d'une quelconque action qui affecte le fichier informatique dans un registre du système d'exploitation.

2. Procédé selon la revendication 1, lequel comprend en outre le stockage du fichier informatique dans une partition sécurisée d'une unité de stockage du dispositif électronique.

3. Procédé selon l'une quelconque des revendications précédentes, dans lequel la copie du fichier informatique dans un dossier temporaire comprend en outre l'attribution de métadonnées originales à ladite copie avec une information qui concerne le fichier informatique lui-même et l'utilisateur ou le processus qui a diligenté la requête d'accès.

4. Procédé selon la revendication 3, lequel comprend en outre le fait de lier des métadonnées de synthèse aux métadonnées originales attribuées à la copie du fichier informatique, dans lequel lesdites métadonnées de synthèse enregistrent une quelconque activité réalisée sur le fichier informatique.

5. Procédé selon l'une quelconque des revendications précédentes, lequel comprend en outre la vérification, dans un module de surveillance, de l'identité de l'utilisateur ou du processus informatique qui a diligenté la requête d'accès.

6. Procédé selon l'une quelconque des revendications précédentes, lequel, après la création d'un avertissement, comprend en outre une interaction de l'utilisateur avec l'interface du dispositif électronique pour confirmer que les modifications effectuées sur la copie du fichier informatique doivent être faites dans le fichier informatique original.

7. Procédé selon l'une quelconque des revendications précédentes, lequel comprend en outre, une fois que les modifications sur la copie du fichier informatique ont été finalisées, la suppression du fichier temporaire et la restauration du fichier informatique original.

8. Système pour protéger un fichier informatique d'un chiffrage éventuel réalisé par un code malveillant, comprenant :
- un dispositif électronique géré par un système d'exploitation qui est configuré pour stocker le fichier informatique ;
- un module de vérification configuré pour, dans le cas d'une modification de fichier, vérifier si les modifications effectuées sur la copie du fichier informatique, par un utilisateur ou un processus informatique, impliquent un chiffrage de la copie du fichier informatique ; et
- un processeur configuré pour réaliser les étapes suivantes : la détection d'une requête d'accès au fichier informatique formulée par l'utilisateur ou le processus informatique du système d'exploitation ; la copie du fichier informatique dans un dossier temporaire d'une unité de mémoire du dispositif électronique, dans lequel la copie du fichier informatique dans un dossier temporaire comprend la création d'un gestionnaire pour la copie du fichier informatique et l'envoi dudit gestionnaire à l'utilisateur ou au processus qui a formulé la requête d'accès ; l'attribution d'un niveau d'accès direct en sécurité maximum au fichier informatique, en fonction du système d'exploitation, d'où ainsi le refus d'un accès direct au fichier informatique pour tous les utilisateurs et processus, à l'exception de ceux qui disposent de privilèges maximum ; l'enregistrement d'une quelconque action qui affecte le fichier informatique dans un registre du système d'exploitation; et en fonction de la vérification du module de vérification : s'il est déterminé que les modifications n'impliquent pas le chiffrage de la copie du fichier informatique, la réalisation des mêmes modifications dans le fichier informatique ; s'il est déterminé que les modifications impliquent le chiffrage de la copie du fichier informatique, la création d'un avertissement à destination de l'utilisateur, par l'intermédiaire d'une interface du dispositif électronique.

9. Système selon la revendication 8, dans lequel le module de vérification est configuré pour évaluer l'entropie du fichier informatique.

10. Système selon l'une quelconque des revendications 8 et 9, lequel comprend en outre un module de surveillance configuré pour vérifier l'identité de l'utilisateur ou du processus informatique qui a formulé la requête d'accès.

11. Programme informatique **caractérisé en ce qu'**il comprend un moyen de code de programme adapté pour réaliser les étapes du procédé selon l'une quelconque des revendications 1 à 7, lorsque ledit programme est exécuté dans un processeur à usage général, un processeur de signal numérique, un FPGA, un ASIC, un microprocesseur, un microcontrôleur ou une quelconque autre forme de composant matériel programmable.
